# EUROPEAN PATENT SPECIFICATION

(11) **EP 2 975 809 B1**
(45) Date of publication and mention of the grant of the patent: **15.02.2017**
(21) Application number: 14306171.1
(22) Date of filing: 18.07.2014
(51) Int. Cl.: H04L 12/721

(54) **Providing protection to a service in a communication network**
Bereitstellung von Schutz für einen Dienst in einem Kommunikationsnetz
Fourniture d'une protection pour un service dans un réseau de communication

(43) Date of publication of application: 20.01.2016
(73) Proprietor: ALCATEL LUCENT, 92100 Boulogne-Billancourt (FR)
(72) Inventor: Busi, Italo, 20059 Vimercate (IT); Addeo, Christian, 20059 Vimercate (IT); Sestito, Vincenzo, 20059 Vimercate (IT)
(74) Representative: Wetzel, Emmanuelle

(56) References cited:
- WO-A1-2011/021179
- US-A1- 2007 280 102
- US-A1- 2013 259 067

## Description

### Technical field

The present invention relates to the field of communication networks. In particular, the present invention relates to providing protection to a service in a communication network (in particular, but not exclusively, an MPLS-TP network) having a ring topology.

### Background art

As known, packet transport networks (PTNs) may be based on the MPLS-TP (Multi-Protocol Label Switching - Transport Profile) technology, as defined by the ITU-T Recommendation G.8110.1 (December 2011) and by the IETF RFC 5921 (July 2010).

In an MPLS-TP network, packets are routed from one network element to another on the basis of labels carried within an MPLS header. In particular, a client service entering the MPLS-TP network is given a pseudowire (briefly, PW) label by a Label Edge Router (briefly, LER) i.e. the input/output network element to the MPLS-TP network, allowing for the emulation of a "virtual wire" connectivity across the PTN. On its turn, the PW (or bundle of PWs) is (are) encapsulated within a so-called label switched path (briefly, LSP), having a specific label: in particular, the header of each MPLS packet comprises at least one LSP label. The LSP label of MPLS packets to be transmitted along a certain LSP has a value which uniquely identifies that LSP. Each intermediate node of the LSP determines the next hop to which the received MPLS packets shall be forwarded based on the value of their LSP label(s). Each intermediate node also typically performs a so-called "label swapping", namely it replaces the LSP label value of the received MPLS packets with a further LSP label value, which is also associated to the same LSP.

Besides, the MPLS-TP technology provides for a set of OAM (Operation, Administration and Management) functions allowing to check, at any defined connectivity layer (i.e., PW layer, LSP layer, Section layer, wherein a "Section" is a network segment between two network elements that are immediately adjacent at the MPLS layer) the integrity, the connectivity, and the transmission performances. Reference standard recommendations for OAM functions are, for instance, the ITU-T Recommendation G.8113.1/Y.1372.1 (November 2012), in particular, paragraphs 6.1, 6.2, 6.3, 7.1, 7.2, 8.1, 8.2, 9.1 and 9.1.1, and the ITU-T Recommendation G.8113.2/Y.1372.2 (November 2012), in particular paragraphs 6.1, 6.2, 6.3, 7.1, 7.2, 8.1 and 9.1.

Packet transport networks hugely deploy ring topologies. In particular, packet transport networks often comprise multiple interconnected rings. For MPLS-TP networks, the ITU-T draft Recommendation "G.8132 draft MPLS-TP shared protection ring protection" (May 2009) and the IETF Internet-Draft "MPLS-TP Ring Protection Switching (MRPS)", draft-helvoort-mpls-tp-ring-protection-switching-06, (April 18, 2014) define an MPLS-TP Ring Protection Switching (in brief, MRPS) scheme allowing to protect user traffic flows transmitted over an MPLS-TP network comprising a number of network elements connected by links according to a ring topology. In particular, according to the MRPS scheme, the links form two counter-rotating ringlets, namely a clockwise ringlet and a counterclockwise ringlet, carrying traffic in opposite directions relative to each other. In particular, the bandwidth of each ringlet is divided into a working bandwidth dedicated to working LSPs, i.e. LSPs carrying user traffic flows, and a protection bandwidth dedicated to protection LSPs. The protection LSP(s) of one ringlet may be used to carry working LSP(s) of the other ringlet in case of failure.

In case of a link or network element failure, user traffic transmitted by the affected working LSP(s) may be switched to any of the protection LSPs, e.g. according to a wrapping technique.

According to the wrapping technique, in an exemplary case of a unidirectional failure affecting a link of the clockwise ringlet, the network element that detects the failure (i.e. the network element downstream the failed link) informs the network element at the opposite side of the failure (i.e. the network element upstream the failed link) and both perform protection switching, i.e. they both switch the MPLS packets of the working LSP(s) transmitted over the failed link to the protection LSP(s) in the opposite direction. According to the example above, the network elements adjacent to the failed link switch the packets to the counterclockwise ringlet. Therefore, from the network element upstream the failed link the packets travel along the counterclockwise ringlet until they reach the network element downstream the failed link. Then, this network element switches the packets back to the clockwise ringlet. User traffic whose working direction is clockwise is protected in the counterclockwise direction and vice versa.

As known, the same scheme described above may also be applied for protection at PW level, in case, for instance, a PW is set up over the ring using the so called "dry-Martini" encapsulation.

Further, it is known that an MPLS-TP packet transport network may transport packets related to a client service along a point-to-point connection established in order to allow communication between external client devices that are attached to the packet transport network. Examples of client technologies are: IP (Internet Protocol), Ethernet, Fiber Channel (FC), Asynchronous Transfer Mode - ATM, Frame Relay, synchronous optical network/synchronous digital hierarchy - SONET/SDH.

MPLS-TP networks support client transport services, by provisioning PW circuits as either Virtual Private LAN Services (VPLS) or Virtual Private Wire Services (VPWS), as defined by the IETF RFC 4664 (September 2006).

At the client device side, the implementation of a known "dual homing" redundancy scheme implies that the client device is attached to the packet transport network on two different user network interfaces (briefly, UNI) which are located in two different network elements (i.e., the LERs), referred to in the following as "dual homing (briefly, DH) network elements". Each user network interface is connected to the network and, depending on the policy implemented, either an "active/standby" behavior or a "load balancing" behavior may apply. In the first case, only one user network interface is active at a time (the "primary" user network interface). The other user network interface is activated only in case the primary user network interface fails. In the second case, both user network interfaces are "active" and the traffic load is properly split ("balanced") by the client device over the two attachment links.

According to a typical dual homing scheme, the determination of the active user network interface is performed by taking into consideration the status of the two user network interfaces and the status of the DH network elements, but it does not take into consideration the status of the packet transport network. The word "status" here relates to considering both failures conditions and administrative operations involving the DH network elements and in particular the user network interfaces.

US 2013/0259067 A1 discloses a method for providing an MPLS tunnel adapted for sharing bandwidth (BW) in an MPLS network. The method comprises establishing the MPLS tunnel as a working MPLS tunnel (ST) to be shared by a plurality of pseudo wires (PWs) passing at least partially along the path of the tunnel ST, wherein a predetermined bandwidth of the bandwidth allocated for the ST is adapted to be shared by the plurality of PWs, of which at least one PW has a different source point and/or a different destination termination point at the ST path, from at least one other of the plurality of PWs.

### Summary of the invention

The inventors noticed that while the MRPS scheme may protect the traffic related to a point-to-point service within the MPLS-TP network, a known dual homing redundancy scheme may be applied for protecting the point-to-point service with respect to failures impacting the LERs (i.e., the network elements at the edge of the MPLS-TP network) at which the external client devices are attached and the links connecting the LERs to the external client devices.

The inventors further noticed that, in principle, a dual homing redundancy scheme may be implemented by providing an Ethernet Virtual Private LAN Services (VPLS) over the MPLS-TP network and instantiating an Ethernet Virtual Switch Instance (VSI), for each of the two DH network elements. In particular, a daisy chain hierarchical configuration, called daisy-chain H-VPLS, may be provided around the ring. It comprises a daisy-chain of concatenated PWs, each PW connecting two adjacent VSls. A hierarchical VPLS model is described in IETF RFC 4762 (January 2007).

However, the H-VPLS applies only to Ethernet client traffic. Indeed, as described in IETF RFC 4762 (January 2007), the H-VPLS relies on Ethernet MAC address learning and forwarding. Therefore, the H-VPLS is not applicable to transport another client service (e.g. an ATM service).

Moreover, the H-VPLS is a multipoint-to-multipoint service. Even if the H-VPLS may carry the point-to-point client service, it is affected by a limited scalability. Indeed, the implementation of a multipoint-to-multipoint service is more complex and resource consuming than the implementation of a point-to-point service. As a matter of fact, a network element typically supports a number of instances of multipoint-to-multipoint services much lower than the number of instances of point-to-point services.

Further, in case of failure of the network user interface at a DH network element, the recovery time is longer when a multipoint-to-multipoint service is implemented instead of a point-to-point service. Indeed, as known, implementation of an Ethernet service implies that, upon detection of the failure, the network elements flush the MAC addresses associated with the VPLS instance. The packets of the VPLS are then flooded over the corresponding pseudowires to all the network elements participating in the VPLS. Therefore, the recovery time comprises, in addition to the time needed for protection switching, the flushing time. Moreover, after the flushing is performed and until the MAC addresses are re-learned by the network elements, the flooding of the packets consumes higher bandwidth

In view of the above, the Applicant has faced the problem of providing protection to a point-to-point service transported in a packet communication network, in particular an MPLS-TP ring network, which allows overcoming the drawbacks described above.

In particular, the Applicant has faced the problem of providing protection to a point-to-point service transported over a label-switched communication network, in particular an MPLS-TP ring network, which is applicable to any type of point-to-point client service (i.e., IP, Ethernet, ATM, FC, Frame Relay, SONET/SDH, PDH, etc.).

In the following description and in the claims, the two DH network element will be also referred to as "dual homing redundancy system". Moreover, the expression "status of the dual homing redundancy system" will comprise both failures conditions and administrative operations involving the DH network elements and in particular the user network interfaces.

Further, in the following description and in the claims, the term "packets", when not otherwise specified, indicates the packets related to the point-to-point client service transported over the communication network by means of a virtual private wire service. In particular, the expression "upstream packets" will indicate packets of the virtual private wire service transported over the communication network in an upstream direction, i.e. in the direction from the communication network to the external client device. The expression "downstream packets" will indicate packets of the virtual private wire service transported over the packet communication network in a downstream direction, i.e. in the direction from the external client device to the packet communication network.

According to a first aspect, the present invention provides a label switched communication network having a ring topology, the communication network being configured to provide a virtual private wire service for supporting a point-to-point client service transported over the communication network between a first edge and a second edge thereof, the network comprising:
- a primary network element and a secondary network element forming a dual homing redundancy system for terminating the point-to-point service at the first edge;
- a transport pseudowire for connecting the primary network element (A) to a further network element terminating the point-to-point service at the second edge; and
- a mate pseudowire for connecting the primary network element and the secondary network element,
   the primary network element being configured to:
   - send upstream packets of the virtual private wire service on the transport pseudowire towards a user network interface of either the primary network element or the secondary network element, depending on a status of the dual homing redundancy system; and
   - send over the transport pseudowire downstream packets of the virtual private wire service coming from its user network interface and/or downstream packets of the virtual private wire service carried on the mate pseudowire,
      wherein the label switched packet communication network is configured to implement a ring protection switching scheme for providing protection to the transport pseudowire and the mate pseudowire.

Preferably, the network is a multi protocol label switching - transport profile network.

Preferably, the ring protection switching scheme is an MPLS-TP ring protection switching scheme.

Profitably, the transport pseudowire and the mate pseudowire have associated a same pseudowire label for each direction along the network.

Preferably, the transport pseudowire has associated a same pseudowire label on all the hops of the communication network between the primary network element and the further network element.

According to embodiments of the present invention, the transport pseudowire and the mate pseudowire are mapped into a transport tunnel and a mate tunnel, respectively.

Preferably, the transport tunnel and the mate tunnel have assigned a same tunnel label for each direction along the network.

Preferably, in case of a failure affecting a bidirectional link between the primary network element and the secondary network element:
- the primary network element is configured to send upstream packets of the virtual private wire service, carried on the transport pseudowire, towards its user network interface;
- the secondary network element is configured to switch downstream packets of the virtual private wire service, coming from its user network interface, to a protection path of the mate pseudowire; and
- the primary network element is further configured to send, over the transport pseudowire, downstream packets of the virtual private wire service, coming from its user network interface , and/or the switched downstream packets.

Preferably, in case of a failure affecting the user network interface of the primary network element, the primary network element is configured to send upstream packets of the virtual private wire service towards the user network interface of the secondary network element, and to send over the transport pseudowire downstream packets of the virtual private wire service carried on the mate pseudowire.

Preferably, in case of a failure affecting the primary network element, the secondary network element is configured to switch downstream packets of the virtual private wire service, coming from its user network interface, to a protection path of the mate pseudowire, and to send towards its user network interface upstream packets of the virtual private wire service carried on a further protection path of the transport pseudowire.

According to a second aspect, the present invention provides a network element for a label switched packet communication network having a ring topology, the communication network being configured to provide a virtual private wire service for supporting a point-to-point client service transported over the communication network between a first edge and a second edge thereof,
the network element forming a dual homing redundancy system with a further network element of the communication network, the dual homing redundancy system terminating the point-to-point service at the first edge,
the network element being connected to an even further network element by a transport pseudowire, the even further network element terminating the point-to-point service at the second edge,
the network element being connected to the further network element by a mate pseudowire,
the network element comprising:
- an upstream selector configured to send upstream packets of the virtual private wire service on the transport pseudowire towards a user network interface of either the network element or the further network element, depending on a status of the dual homing redundancy system; and
- a further selector configured to send over the transport pseudowire downstream packets of the virtual private wire service coming from the user network interface of the network element and/or downstream packets of the virtual private wire service carried on the mate pseudowire,
   wherein the network element is further configured to implement a ring protection switching scheme for providing protection to the transport pseudowire and the mate pseudowire.

Preferably, the further selector is configured to merge downstream packets of the virtual private wire service coming from the user network interface of the network element and downstream packets of the virtual private wire service carried on the mate pseudowire.

Preferably, the user network interface of the network element comprises an OAM tool configured to detect either a failure involving the user network interface, or an external client device attached to the user network interface or the link connecting the network element to the external client device.

Preferably, in case of a failure involving the user network interface, the upstream selector is configured to send upstream packets of the virtual private wire service, carried on the transport pseudowire, towards the user network interface of the further network element, and the further selector is configured to send over the transport pseudowire, downstream packets of the virtual private wire service carried on the mate pseudowire.

Preferably, in case of a failure affecting a bidirectional link between the network element and the further network element, the upstream selector is configured to send upstream packets of the virtual private wire service, carried on the transport pseudowire, towards the user network interface of the network element, and the further selector is configured to send, over the transport pseudowire, downstream packets of the virtual private wire service coming from the user network interface of the network element and/or downstream packets of the virtual private wire service carried on a protection path of the mate pseudowire.

### Brief description of the drawings

The present invention will become clearer by reading the following detailed description, given by way of example and not of limitation, to be read by referring to the accompanying drawings, wherein:
- Figure 1 schematically shows a communication network according to the present invention;
- Figure 2 schematically shows a network element of a dual homing redundancy scheme in the communication network of Figure 1;
- Figure 3 schematically shows two network elements of the dual homing redundancy scheme operating in normal conditions;
- Figure 4 schematically shows the operation of the dual homing network elements of Figure 3 in case a failure affects the link between them;
- Figure 5 schematically shows the operation of the dual homing network elements in case a failure affects a user network interface; and
- Figure 6 schematically shows the operation of the dual homing network elements and a further network element in case a failure affects one of the two dual homing network elements.

### Detailed description of preferred embodiments of the invention

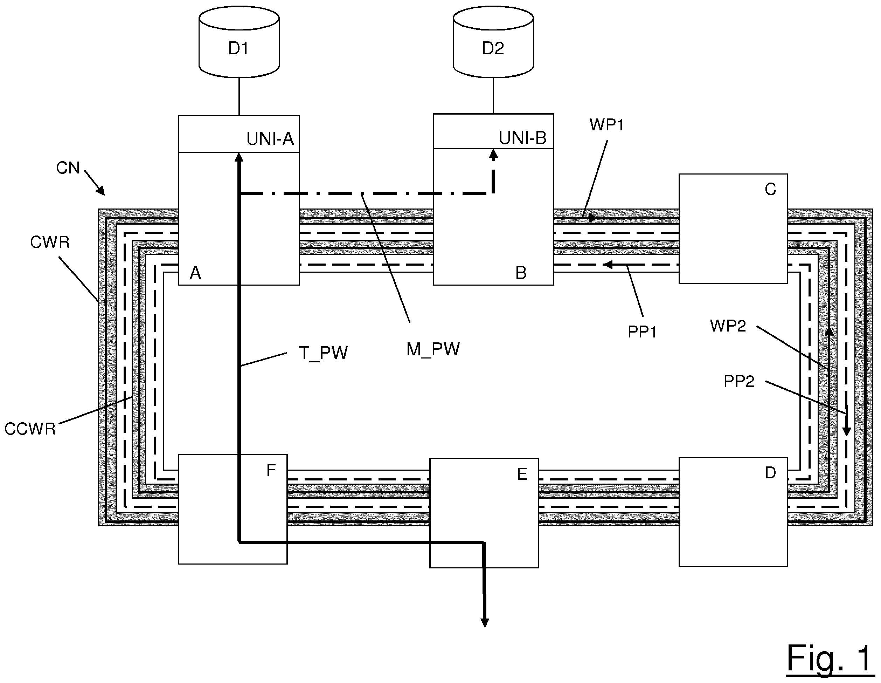

Figure 1 schematically shows a communication network CN according to an embodiment of the present invention. The communication network CN preferably is a label-switched network. More preferably, the communication network CN is an MPLS-TP network.

The communication network CN preferably comprises a number of network elements connected according to a single ring topology. In particular, the communication network CN comprises, by way of non limiting example, six network elements A, B, C, D, E, F connected by six physical unidirectional links (e.g. fiber optics links) forming a clockwise ringlet CWR and six physical unidirectional links (e.g. fiber optics links) forming a counterclockwise ringlet CCWR.

Preferably, the network elements of the communication network CN implement a ring protection switching scheme, more preferably the MRPS scheme. According to the MRPS scheme, the bandwidth associated with each unidirectional link is split between a "working" portion and a "protection" portion. In Figure 1, for each ringlet, this "working" portion is represented in grey color, while the "protection" portion is represented in white color.

The communication network CN preferably supports at least one Virtual Private Network (VPN) point-to-point service. More preferably, the communication network CN supports at least one Virtual Private Wire Service (VPWS), as defined in the IETF RFC 4664 (September 2006). Preferably the at least one VPN point-to-point service, in particular the at least one virtual private wire service, implements a point-to-point client service enabling a bidirectional exchange of packets between external client devices attached to the communication network CN at two edges thereof. The client devices may be IP devices, Ethernet devices, Fiber Channel devices, ATM devices, SDH/SONET devices, PDH devices, etc. In particular, as a non-limiting example, it is assumed that the point-to-point service enables a bidirectional exchange of packets between an external client device D1 attached to the communication network CN at an edge thereof through a dual homing redundancy system implementing a dual homing redundancy scheme and comprising the network element A and the network element B, and another external client device (not shown in Figure 1) attached to the communication network CN at another edge thereof through network element E. This bidirectional exchange of packets is represented in Figure 1 by a solid line bidirectional arrow, which also represents the nominal path of the packets of the point-to-point service within the communication network CN.

The dual homing redundancy system shown in Figure 1 provides for connecting the point-to-point service on two different user network interfaces UNI-A, UNI-B which are located in the network elements A, B.

As a non limiting example, it is also assumed that the dual homing redundancy scheme is operated on a couple of redundant external client devices D1, D2 as shown in Figure 1, so that a respective external client device D1, D2 is attached to each of network element A and network element B of the dual homing redundancy system. Using a couple of external client devices may provide protection against failures possibly affecting the external client device, or may be used when, for instance, load balancing mechanisms are implemented. However, the configuration of the external client device(s) is not relevant to the present invention and hence will not be described in greater detail herein after.

It is assumed that in the communication network CN, a first working path WP1 is preferably allocated on the "working" portion of the clockwise ringlet CWR, for carrying the packets of the virtual private wire service from network element E to the network elements A, B of the dual homing redundancy system. Moreover, preferably, a first circular protection path PP1 is correspondingly allocated on the opposite direction ringlet, e.g. on the "protection" portion of the counterclockwise ringlet CCWR. The first protection path PP1 provides a protection to the first working path WP1.

Similarly, a second working path WP2 is preferably allocated on the "working" portion of the counter-clockwise ringlet CCWR, for carrying the packets of the virtual private wire service from the network elements A, B of the dual homing redundancy system to network element E. Moreover, preferably, a second circular protection path PP2 is correspondingly allocated on the opposite direction ringlet, e.g. on the "protection" portion of the clockwise ringlet CWR. The second protection path PP2 provides a protection to the second working path WP2 allocated on the counter-clockwise ringlet CCWR.

In Figure 1, the working paths are indicated by solid lines, while the protection paths are indicated by dashed lines.

In the following description,
- the "dual homing (briefly, DH) network elements" are the network elements that are involved in the dual homing redundancy scheme; in the exemplary communication network CN of Figure 1, the DH network elements are network elements A and B;
- the "upstream direction" is here defined as the direction of packets of the virtual private wire service from the communication network CN to the external client device(s) D1, D2, and the "downstream direction" is here defined as the opposite direction; in the exemplary communication network CN of Figure 1 the upstream direction is the direction from network element E to the DH network elements A, B on the clockwise ringlet, and the downstream direction is the direction from the DH network elements A, B to network element E on the counter-clockwise ringlet;
- the "primary" DH network element is the DH network element that firstly drops the packets from the ring to the external device, in upstream direction, in normal conditions (i.e. in the absence of failures or administrative commands); the other DH network element is referred to as "secondary" DH network element. The "primary" DH network element of the two DH network elements is preferably selected by a network operator. In the exemplary situation of Figure 1, it is assumed that the primary DH network element is network element A and the secondary DH network element is network element B; and
- the "peer edge" network element is the network element where the point-to-point client service is terminated at the opposite side of the communication network CN with respect to the dual homing redundancy system. In the exemplary situation of Figure 1, the peer edge network element is network element E.
It is to be noticed that the situation depicted in Figure 1, in which the virtual private wire service is terminated, on one side of the communication network CN, on the dual homing redundancy system (comprising DH network elements A and B) and, on the other side, on a single network element (i.e. network element E), is here provided for sake of example only. Indeed, the present invention applies also to other situations in which, for instance, the service is terminated on a dual homing redundancy system on both sides of the communication network CN.

Moreover, the present invention similarly applies both to communication networks having a single ring topology, such as the communication network CN shown in Figure 1, and to communication networks comprising a number of interconnected rings.

Further, while, for sake of example, in Figure 1 it is assumed that the upstream packets travel clockwise in the communication network CN, the present invention may similarly apply in case the upstream packets travel counter-clockwise along the communication network CN. In this case, the primary DH network element would be network element B and the secondary DH network element would be network element A.

According to the present invention, for a certain point-to-point client service:
- in the downstream direction, the communication network CN may receive packets from the external client device(s) D1, D2 on either one user network interface UNI-A, UNI-B of a corresponding DH network element A, B or on both the user network interfaces UNI-A and UNI-B of both the DH network elements A and B. In particular, if the two user network interfaces UNI-A and UNI-B implement a load balancing algorithm, the communication network CN may receive packets from both of them; and
- in the upstream direction, the communication network CN preferably delivers packets to the primary DH network element A or to the secondary DH network element B depending on which user network interface UNI-A, UNI-B is active (i.e. on which user network interface is not affected by failures or administrative commands), as it will be described in greater detail herein after.

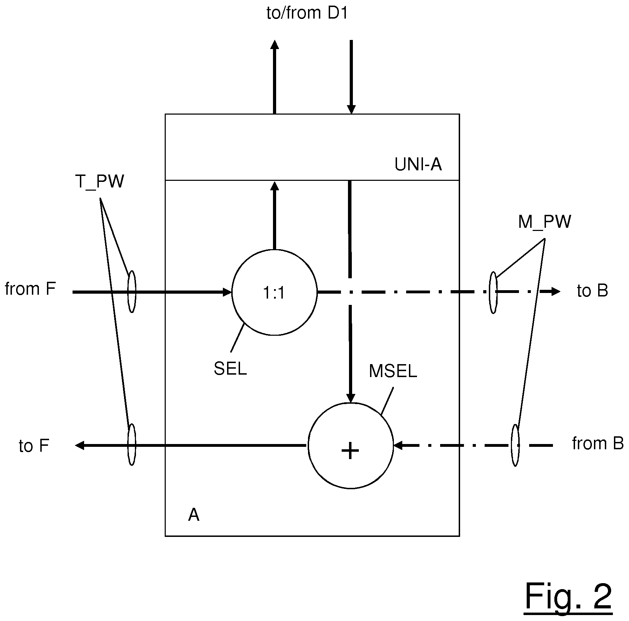

Figure 2 schematically shows the primary DH network element A according to embodiments of the present invention.

Preferably, the primary DH network element A comprises an upstream selector SEL that is preferably configured to send packets in the upstream direction towards either the local user network interface UNI-A or the user network interface UNI-B of the secondary DH network element B. In particular, the upstream selector SEL is preferably configured to send packets in the upstream direction towards the local user network interface UNI-A in normal conditions, and to send packets towards the user network interface UNI-B of the secondary DH network element B in the presence of failures or administrative commands affecting the local user network interface UNI-A.

Moreover, according to an embodiment of the present invention, which is applicable when the communication network CN may receive packets from both the user network interfaces UNI-A and UNI-B of the DH network elements A and B and which is represented in Figure 2, the primary DH network element A comprises a downstream merging selector MSEL which is configured to merge packets coming in the downstream direction from both the local user network interface UNI-A and the user network interface UNI-B of the secondary DH network element B.

According to an alternative embodiment, which is applicable when the communication network CN may receive packets only from one user network interface UNI-A, UNI-B of one DH network element A, B, the primary DH network element A comprises, instead of the downstream merging selector MSEL, a downstream selector (not shown in the Figures) similar to the upstream selector SEL mentioned above.

The operation of the upstream selector SEL and the merging/downstream selector advantageously allow implementing a protection scheme for the dual homing network elements, which, in combination with the ring protection switching scheme, provides full protection for the point-to-point client service.

Herein after, a detailed description of operations of the network elements for providing protection to a certain point-to-point client service supported, in the communication network CN, by a corresponding virtual private wire service, will be provided.

For sake of simplicity, the following description and the Figures will focus on the more general situation according to which the communication network CN may receive packets from both the user network interfaces UNI-A, and UNI-B of both the DH network elements A and B.

According to the present invention, in the primary DH network element A, the virtual private wire service is preferably provisioned by provisioning a first (concatenated) pseudowire supporting the service between the first DH network element A and the peer edge network element E and mapped on the working paths WP1 and WP2. This first (concatenated) pseudowire will be referred to as "transport pseudowire" and is indicated in Figures 1 and 2 by the solid line arrows with reference text "T_PW".

In the following description, the expression "provisioning a pseudowire" in a network element will indicate the operations of creating/modifying/deleting a pseudowire between that network element and another network element of the communication network CN, determining a set of parameters for the pseudowire, such as, for instance, an encapsulation type and a bandwidth available for the pseudowire, and configuring the network element accordingly. However, the operations for provisioning a pseudowire are known and only those which are relevant to the present invention will be described herein after.

In particular, provisioning the transport pseudowire T_PW in the primary DH network element A preferably comprises configuring the local user network interface UNI-A so as to terminate the transport pseudowire T_PW. Moreover, preferably, provisioning the transport pseudowire T_PW in the primary DH network element A also comprises configuring the primary DH network element A for implementing the ring protection switching scheme, in particular the MRPS scheme, to protect the packets carried by the transport pseudowire T_PW and mapped on the working paths WP1, WP2, by switching these packets to the corresponding protection paths PP1, PP2.

Moreover, for the same virtual private wire service, a second pseudowire connecting the primary DH network element A and the secondary DH network element B is preferably provisioned in the primary DH network element A and mapped on the corresponding working path WP1, WP2. This second pseudowire will be referred to as "mate pseudowire" and is indicated in Figures 1 and 2 by the dashed-dotted line arrow with reference text "M_PW".

Preferably, provisioning the mate pseudowire M_PW in the primary DH network element A comprises configuring the primary DH network element A for implementing the ring protection switching scheme, in particular the MRPS scheme, to protect the packets carried by the mate pseudowire M_PW and mapped on the working paths WP1, WP2, by switching these packets to the corresponding protection paths PP1, PP2.

Further, according to the present invention, in the primary DH network element A, a capability to interoperate with the external client device D1, via appropriate OAM tools able to check the integrity/continuity of the interconnection link, is preferably provided at the local user network interface UNI-A. In other words, an OAM tool is configured to detect either a failure involving the local user network interface UNI-A, or the external client device D1 or the link connecting the primary DH network element A to the external client device D1.

For the same virtual private wire service, in the secondary DH network element B, the mate pseudowire M_PW is preferably provisioned. In particular, provisioning the mate pseudowire M_PW in the secondary DH network element B preferably comprises configuring the local user network interface UNI-B so as to terminate the mate pseudowire M_PW. Moreover, preferably, provisioning the mate pseudowire M_PW in the secondary DH network element B also comprises configuring the secondary DH network element B for implementing the ring protection switching scheme, in particular the MRPS scheme, to protect the packets carried by the mate pseudowire M_PW and mapped on the working paths WP1, WP2, by switching these packets to the corresponding protection paths PP1, PP2.

Further, according to the present invention, in the secondary DH network element B, a capability to interoperate with the external client device D2 attached to the secondary DH network element B, via appropriate OAM tools able to check the integrity/continuity of the interconnection link, is preferably provided also at the local user network interface UNI-B. In other words, an OAM tool is configured also to detect either a failure involving the user network interface UNI-B of the secondary DH network element B, or the external client device D2 or the link connecting the secondary DH network element to the external client device D2.

Examples of possible OAM tools operated at the user network interface UNI-A, UNI-B of the DH network elements A, B are: "physical" Loss of Signal detection, MPLS-TP Continuity Check (as described in, for instance, the ITU-T Recommendations G. 8113.1/2 already cited above), Ethernet CCM (as described in, for instance, ITU-T Recommendation G.8013/Y.1731, November 2013, in particular in paragraphs 6.1, 6.2, 6.3, 7.1, 9.1, 9.2, 10.1 and 10.2), Ethernet "first mile" (as described in, for instance, IEEE 802.3ah standard, September 2004), MPLS BFD (as described in, for instance, IETF RFC 5884, June 2010).

According to embodiments of the present invention, the selector SEL and the merging selector MSEL in the primary DH network element A are configured to operate as described in the following.

In normal conditions (i.e. in the absence of failures affecting the local user network interface UNI-A and/or the external client device D1 and/or the link connecting the primary DH network element A to the external client device D1), the selector SEL is preferably configured to send the packets of the virtual private wire service coming from network node F and directed to the external client device D1 (i.e. in the upstream direction) towards the local user network interface UNI-A on the transport pseudowire T_PW (solid line in Figure 2) mapped on the first working path WP1. In the presence of a failure affecting the local user network interface UNI-A and/or the external client device D1 and/or the link connecting the primary DH network element A to the external client device D1, the selector SEL is preferably configured to send the packets of the virtual private wire service towards the user network interface UNI-B of the secondary DH network element B on the mate pseudowire M_PW (dashed-dotted line in Figure 2) mapped on the first working path WP1.

In the primary DH network element A, the merging selector MSEL is preferably configured to merge the packets of the virtual private wire service coming, in the downstream direction, from the local user network interface UNI-A and the packets of the virtual private wire service coming, in the downstream direction, from the user network interface UNI-B of the secondary DH network element B on the mate pseudowire M_PW, as represented in Figure 2.

According to embodiments of the present invention, the transport pseudowire T PW and the mate pseudowire M_PW are preferably assigned the same pseudowire label for each direction. In particular, for each direction, the same pseudowire label is preferably assigned to the transport pseudowire T_PW and the mate pseudowire M_PW in the DH network elements A, B, in the peer edge network element E and in all the network elements between the DH network elements A, B and the peer edge network element E along the nominal path of the packets (namely, in the exemplary communication network CN of Figure 1, the network element F).

Moreover, preferably, the transport pseudowire T_PW is assigned the same pseudowire label on all the hops of the communication network CN connecting the primary DH network element A and the peer edge network element E.

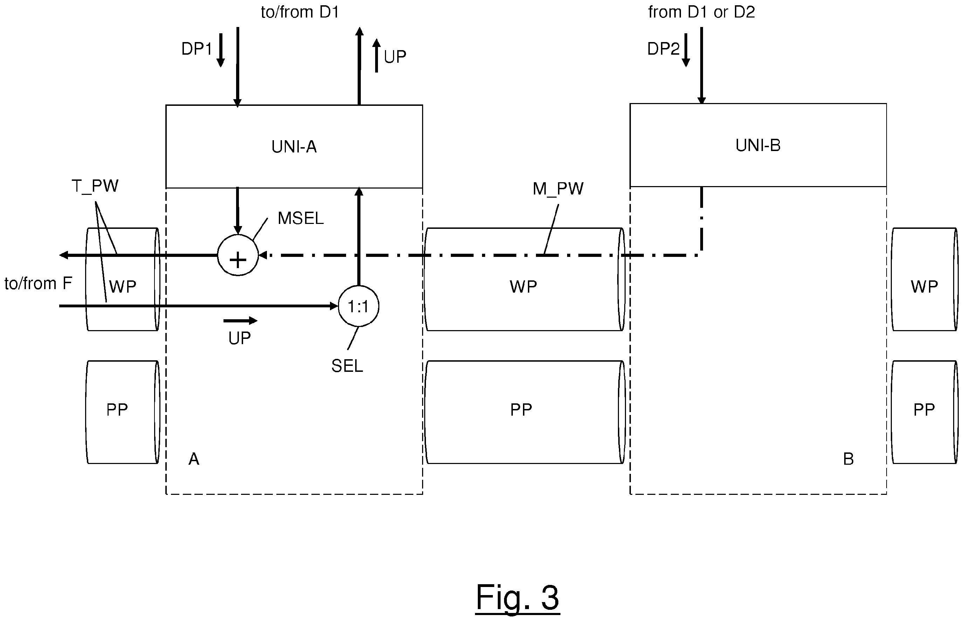

Figure 3 schematically shows the operation of the primary DH network element A and the secondary DH network element B according to an embodiment of the present invention. It is assumed that no failures affect the communication network CN and the client external device(s) D1, D2.

In Figures 3, 4, 5 and 6, for sake of simplicity, the reference text "WP" generically indicates the working paths WP1, WP2 and analogously, the reference text "PP" generically indicates the protection paths PP1, PP2. The working paths of the transport pseudowire are indicated by solid line arrows, the working paths of the mate pseudowire by dashed-dotted line arrows, and the protection paths of both the transport pseudowire and the mate pseudowire are indicated by dashed lines.

Moreover, in Figures 3, 4, 5 and 6 the reference text "UP" generically indicates the packets travelling in the upstream direction from the peer edge network element E to the DH network elements A, B, the reference text "DP1" generically indicates the packets travelling in the downstream direction from the external client device D1 attached to the primary DH network element A to the peer edge network element E, and the reference text "DP2" generically indicates the packets travelling in the downstream direction from the external client device D2 attached to the secondary DH network element B to the peer edge network element E.

In the upstream direction, packets UP of the virtual private wire service supporting the point-to-point client service between the DH network elements A, B of the dual homing redundancy system and the peer edge network element E are carried on the transport pseudowire T_PW along a working path WP to the selector SEL. In the absence of failures, the selector SEL preferably sends the packets towards the local user network interface UNI-A.

In the downstream direction, packets DP2 of the same point-to-point client service are assumed to be transmitted from the external client devices D1, D2 towards the communication network CN through both the user network interface UNI-A of the primary DH network element A and the user network interface UNI-B of the secondary DH network element B. Then, packets DP2 of the virtual private wire service supporting the point-to-point client service and coming from the user network interface UNI-B of the secondary DH network element B are carried on the mate pseudowire M_PW along a working path WP to the merging selector MSEL of the primary DH network element A. At the merging selector MSEL, packets DP1 coming directly from the local user interface UNI-A and packets DP2 coming from the user network interface UNI-B of the secondary DH network element B are preferably merged and then transmitted towards the network element F on the transport pseudowire T_PW along the working path WP.

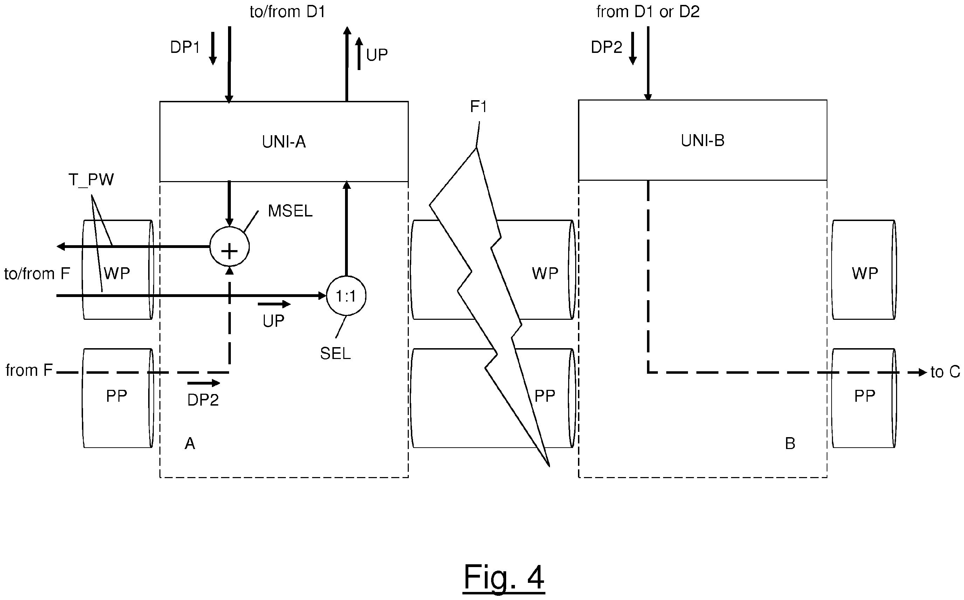

Figures 4, 5 and 6 schematically show the operations of the DH network elements in case of failures. As it will be clearer from the following description, the combination of the dual homing redundancy scheme and the ring protection switching scheme according to the present invention allows recovering from a failure in a very efficient manner.

Figure 4 schematically shows the operation of the primary DH network element A and the secondary DH network element B according to the present invention in case of a first failure F1 occurs, the first failure F1 affecting the bidirectional link between the primary DH network element A and the secondary DH network element B.

In the upstream direction, upstream packets UP are delivered to the external client device D1 in exactly the same manner described above with reference to Figure 3.

In the downstream direction, packets DP1, DP2 of the same point-to-point client service are assumed to be transmitted from the external client devices D1, D2 towards the communication network CN through both the user network interface UNI-A of the primary DH network element A and the user network interface UNI-B of the secondary DH network element B. Packets DP2 of the virtual private wire service coming from the user network interface UNI-B of the secondary DH network element B can not be carried on the mate pseudowire M_PW along a working path WP to the merging selector MSEL of the primary DH network element A. According to the present invention, the secondary DH network element B implements the wrapping technique described above in connection with the ring protection switching scheme for providing protection to the packets DP2 of the mate pseudowire M_PW. In particular, the secondary DH network element B preferably switches the packets DP2 to a protection path PP of the mate pseudowire M_PW. Then, the packets DP2 travel clockwise along the communication network CN on the protection path PP until they reach the primary DH network element A (i.e. the network element at the other side of the failure, in accordance with the ring protection switching scheme). At the merging selector MSEL of the primary DH network element A, packets DP2 coming from the secondary DH network element B along the protection path PP and packets DP1 coming directly from the external client device D1 through the local user network interface UNI-A are preferably merged and then transmitted to the network element F on the transport pseudowire T_PW along a working path WP. The downstream packets travel along the communication network CN on the transport pseudowire T_PW along the working path WP until they reach the peer edge network element E and exit the communication network CN

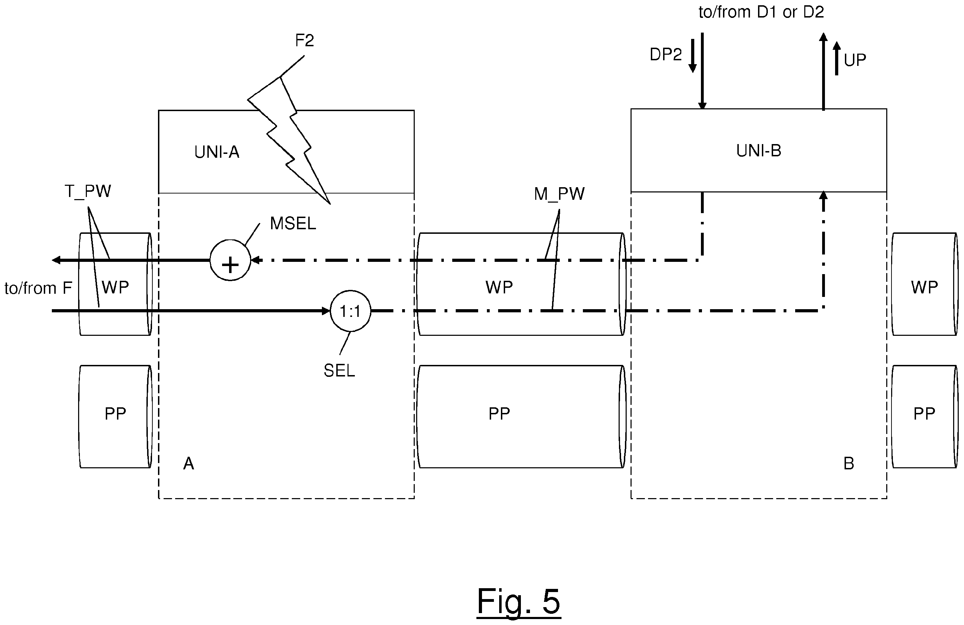

Figure 5 schematically shows the operation of the primary DH network element A and the secondary DH network element B according to the present invention in case of a second failure F2 occurs, the second failure F2 affecting the user network interface UNI-A of the primary DH network element A. The failure F2 may be detected at the user network interface UNI-A of the primary network element A by operating an OAM tool as mentioned above.

In the upstream direction, the packets UP of the virtual private wire service can not be delivered to the external client device D1 through the local user network interface UNI-A. According to the present invention, at the selector SEL, the packets UP coming from network element F are sent towards the secondary DH network element B on the mate pseudowire M_PW, along a working path WP. At the secondary DH network element B, the packets UP are delivered to the external client device D2 through the local user network interface UNI-B.

In the downstream direction, packets may enter the communication network CN only through the user network interface UNI-B of the secondary DH network element B. At the secondary DH network element B, the downstream packets DP2 are sent towards the primary DH network element A on the mate pseudowire M_PW along a working path WP. In the primary DH network element A, the merging selector MSEL preferably sends the packets DP2 coming from the secondary DH network element B towards the network element F on the transport pseudowire T_PW. The downstream packets DP2 travel on the transport pseudowire T_PW along the working path WP until they reach the peer edge network element E and exit the communication network CN.

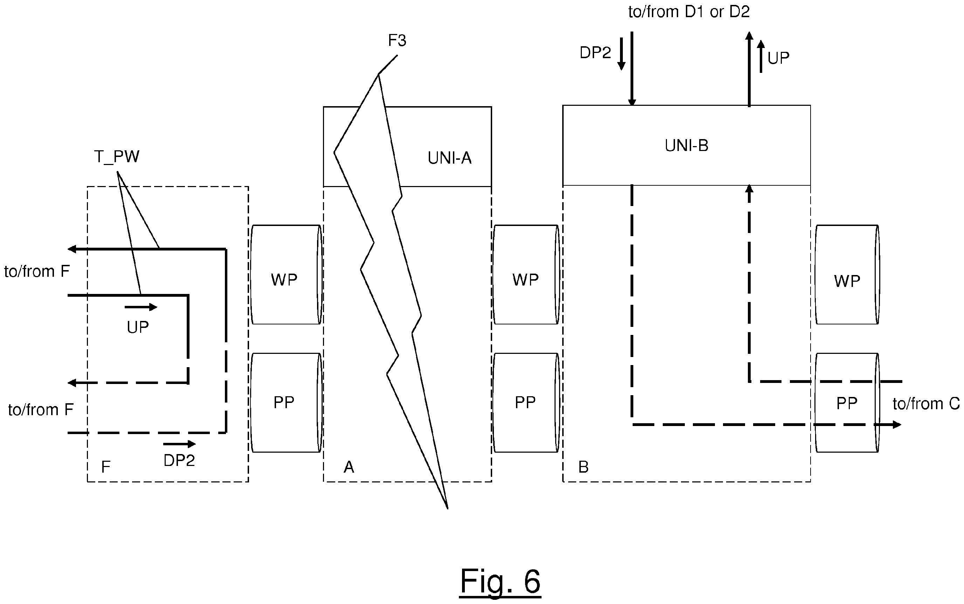

Figure 6 schematically shows the operation of the primary DH network element A and the secondary DH network element B according to the present invention in case of a third failure F3 occurs, the third failure F3 affecting the primary DH network element A.

In the upstream direction, the network element F preferably implements the wrapping technique described above in connection with the ring protection switching scheme for providing protection to the upstream packets UP of the transport pseudowire T_PW. In particular, the network element F preferably switches back the packets UP coming from the network element E to a protection path PP of the transport pseudowire T_PW. The packets UP travel along the communication network CN on the protection path PP and reach the secondary DH network element B. At the secondary DH network element B, the upstream packets UP are delivered to the external client device D2 through the local user network interface UNI-B.

In the downstream direction, packets may enter the communication network CN only through the user network interface UNI-B of the secondary DH network element B. The downstream packets DP2 however can not be forwarded to the primary DH network element A on the mate pseudowire M_PW on a working path WP. The secondary DH network element B preferably implements the wrapping technique described above in connection with the ring protection switching scheme for providing protection to the packets DP2 of the mate pseudowire M_PW. In particular, the secondary DH network element B preferably switches the downstream packets DP2 to a protection path PP of the mate pseudowire M_PW. The downstream packets DP2 travel along the communication network CN on the protection path PP until they reach the network element F, where they are wrapped into the transport pseudowire T_PW over a working path WP of the communication network CN to reach the peer edge network element E.

Therefore, according to the above, the present invention provides a protection scheme resulting from the combination of the dual homing redundancy scheme and the ring protection switching scheme applied to the transport pseudowire and the mate pseudowire. According to the present invention, a client service transported in a packet transport may be protected both against failures affecting the links attaching the external client devices to the packet transport network and against failures in the packet transport network. It allows switching the upstream packets at the pseudowire level either towards the user network interface of the primary DH network element or towards the secondary DH network element depending on the status of the DH network elements and in particular of the user network interfaces. If the user network interface of the primary DH network element fails, the packets are promptly switched towards the other user network interface. Moreover, the ring protection switching scheme implemented within the packet transport network allows recovering from failures occurring in the network.

As apparent from the above, the present invention allows protecting any point-to-point client service transported in a packet transport network in a very efficient manner. A virtual private wire service is used which is a point-to-point service providing a high scalability. Also, it prevents wasting more complex and costly resources such as multipoint-to-multipoint Virtual Private LAN Services (VPLSs). Advantageously, it allows protecting any type of client service (i.e. Ethernet, IP, ATM, SDH/SONET, PDH, FC, Frame Relay, etc.) and allows recovering from failures in reduced times.

Further, as described above, the transport pseudowire and the mate pseudowire of a same client service have, unidirectionally, the same label within the communication network. This advantageously allows recovering from, a failure affecting the primary DH network element, and from a combination of the failure affecting the primary DH network element and any other failure occurring between the primary DH network element and the peer edge network element, as illustrated in the following.

With reference again to Figure 6, when a failure occurs at the primary DH network element A, the downstream packets DP2 can not be forwarded to the primary DH network element A on the mate pseudowire M_PW and they are switched at the secondary DH network element B to the protection path PP, until they reach, along the clockwise direction, the network element at the other side of the failure, namely network element F. If, at network element F, the transport pseudowire T_PW does not have the same label as the mate pseudowire M_PW at the DH primary network element A, along the clockwise direction, the packets traveling along the protection path PP may be not properly forwarded as if they were packets belonging to the transport pseudowire T_PW because the received label at network element F, which is to be used for forwarding purposes, is different from the expected one, i.e. it is different from the label allocated to the incoming transport pseudowire T_PW.

As described in the foregoing, the protection scheme combining the dual homing redundancy scheme and the ring protection switching scheme according to the present invention may be applied to the transport pseudowire and the mate pseudowire for protecting the packets of the point-to-point service. In particular, according to the above description, the protection scheme may be applied to the transport pseudowire and the mate pseudowire as directly mapped on the MPLS-TP sections of the packet transport network (e.g. in case of pseudowires with the so-called "dry-Martini" encapsulation).

In an alternative situation, the transport pseudowire and the mate pseudowire may be carried in a respective tunnel (namely, a respective MPLS LSP, in case the communication network CN is an MPLS-TP network), as described in the IETF RFC 4664 (September 2006). In particular, in case a number of pseudowires in a label switched communication network share the same forwarding rules, they can be aggregated in a tunnel.

The present invention applies also in this alternative situation, wherein:
- a transport tunnel preferably carries a number of transport pseudowires which are terminated in the same DH network elements;
- a mate tunnel between the DH network elements, one for each transport tunnel, preferably carries the mate pseudowires associated with the transport pseudowires carried in the transport tunnel.
The transport pseudowires carried in the transport tunnel may be terminated on different user network interfaces of the DH network elements. Therefore, according to the present invention, the switching of the packets at the DH network elements is still performed as described above, i.e. at the pseudowire level. Indeed, some transport pseudowires may require to be terminated at the user network interface of the primary DH network element while other transport pseudowires may require to be terminated at the user network interface of the secondary DH network element and hence they have to be sent on the corresponding mate pseudowire in the mate tunnel. If the transport tunnel carries only pseudowires terminated on a single user network interface, the packets of the transport pseudowires are preferably switched together towards the corresponding user network interface.

Moreover, for each direction, the transport tunnel is preferably assigned the same tunnel label as the mate tunnel. This advantageously allows recovering from failures affecting the primary DH network element, and from a combination of the failure affecting the primary DH network element and any other failure occurring between the primary DH network element and the peer edge network element.

In this case, the ring protection switching scheme applies to the transport tunnel and the mate tunnel, as the forwarding rules are the same for all the pseudowires of a tunnel within the communication network, while the dual homing redundancy scheme applies to the pseudowires carried inside them as the switching of packets is performed at the pseudowire level.

Therefore, advantageously, the present invention may be applied when pseudowires directly mapped on MPLS-TP sections are considered but also when the pseudowires are encapsulated into tunnels, which enable a more efficient scalability of the transport entities.

Further, the present invention is also applicable to "mixed" situations, according to which the transport pseudowires and the mate pseudowires of some (first) services are directly mapped on MPLS-TP sections and the transport pseudowires and the mate pseudowires of other (second) services are mapped into tunnels. In this case, for the first services, the ring protection scheme and the dual homing redundancy scheme of the present invention apply to the transport pseudowires and the mate pseudowires. For the second services, the ring protection switching scheme applies to the transport tunnel and the mate tunnel, while the dual homing redundancy scheme applies to the pseudowires carried inside them.

## Claims

1. A label switched communication network (CN) having a ring topology, said communication network (CN) being configured to provide a virtual private wire service for supporting a point-to-point client service transported over the communication network (CN) between a first edge and a second edge thereof, said network (CN) comprising:
- a primary network element (A) and a secondary network element (B) forming a dual homing redundancy system for terminating said point-to-point service at said first edge;
- a transport pseudowire (T_PW) for connecting said primary network element (A) to a further network element (E) terminating said point-to-point service at said second edge; and
- a mate pseudowire (M_PW) for connecting said primary network element (A) and said secondary network element (B),
said primary network element (A) being configured to:
- send upstream packets (UP) of the virtual private wire service on the transport pseudowire (T_PW) towards a user network interface (UNI-A, UNI-B) of either the primary network element (A) or the secondary network element (B), depending on a status of said dual homing redundancy system; and
- send over the transport pseudowire (T_PW) downstream packets (DP1) of the virtual private wire service coming from its user network interface (UNI-A) and/or downstream packets (DP2) of the virtual private wire service carried on the mate pseudowire (M_PW),
wherein said label switched packet communication network (CN) is configured to implement a ring protection switching scheme for providing protection to said transport pseudowire (T_PW) and said mate pseudowire (M_PW).

2. The label switched packet communication network (CN) according to claim 1, wherein said network (CN) is a multi protocol label switching - transport profile network.

3. The label switched packet communication network (CN) according to claim 2, wherein said ring protection switching scheme is an MPLS-TP ring protection switching scheme.

4. The label switched packet communication network (CN) according to any of the preceding claims, wherein said transport pseudowire (T_PW) and said mate pseudowire (M_PW) have associated a same pseudowire label for each direction along said network (CN).

5. The label switched packet communication network (CN) according to any of the preceding claims, wherein said transport pseudowire (T_PW) has associated a same pseudowire label on all the hops of the communication network (CN) between said primary network element (A) and said further network element (E).

6. The label switched packet communication network (CN) according to any of the preceding claims, wherein said transport pseudowire (T_PW) and said mate pseudowire (M_PW) are mapped into a transport tunnel and a mate tunnel, respectively.

7. The label switched packet communication network (CN) according to claim 6, wherein said transport tunnel and said mate tunnel have assigned a same tunnel label for each direction along said network (CN).

8. The label switched packet communication network (CN) according to any of the preceding claims, wherein, in case of a failure (F1) affecting a bidirectional link between said primary network element (A) and said secondary network element (B):
- said primary network element (A) is configured to send upstream packets (UP) of the virtual private wire service, carried on the transport pseudowire (T_PW), towards its user network interface (UNI-A);
- said secondary network element (B) is configured to switch downstream packets (DP2) of the virtual private wire service, coming from its user network interface (UNI-B), to a protection path (PP) of said mate pseudowire (M_PW); and
- said primary network element (A) is further configured to send, over the transport pseudowire (M_PW), downstream packets (DP1) of the virtual private wire service, coming from its user network interface (UNI-A), and/or said switched downstream packets (DP2).

9. The label switched packet communication network (CN) according to any of the preceding claims, wherein, in case of a failure (F2) affecting the user network interface (UNI-A) of said primary network element (A), the primary network element (A) is configured to send upstream packets (UP) of the virtual private wire service towards the user network interface (UNI-B) of the secondary network element (B), and to send over the transport pseudowire (T_PW) downstream packets (DP2) of the virtual private wire service carried on the mate pseudowire (M_PW).

10. The label switched packet communication network (CN) according to any of the preceding claims, wherein, in case of a failure (F3) affecting said primary network element (A), the secondary network element (B) is configured to switch downstream packets (DP2) of the virtual private wire service, coming from its user network interface (UNI-B), to a protection path (PP) of said mate pseudowire (M_PW), and to send towards its user network interface (UNI-B) upstream packets (UP) of the virtual private wire service carried on a further protection path (PP) of said transport pseudowire (T_PW).

11. A network element (A) for a label switched packet communication network (CN) having a ring topology, said communication network (CN) being configured to provide a virtual private wire service for supporting a point-to-point client service transported over the communication network (CN) between a first edge and a second edge thereof,
said network element (A) forming a dual homing redundancy system with a further network element (B) of said communication network (CN), said dual homing redundancy system terminating said point-to-point service at said first edge,
said network element (A) being connected to an even further network element (E) by a transport pseudowire (T_PW), said even further network element (E) terminating the point-to-point service at said second edge,
said network element (A) being connected to the further network element (B) by a mate pseudowire (M_PW),
said network element (A) comprising:
- an upstream selector (SEL) configured to send upstream packets (UP) of the virtual private wire service on the transport pseudowire (T_PW) towards a user network interface (UNI-A, UNI-B) of either the network element (A) or the further network element (B), depending on a status of said dual homing redundancy system; and
- a further selector (MSEL) configured to send over the transport pseudowire (T_PW) downstream packets (DP1) of the virtual private wire service coming from the user network interface (UNI-A) of the network element (A) and/or downstream packets (DP2) of the virtual private wire service carried on the mate pseudowire (M_PW),
wherein said network element (A) is further configured to implement a ring protection switching scheme for providing protection to said transport pseudowire (T_PW) and said mate pseudowire (M_PW).

12. The network element (A) according to claim 11, wherein said further selector (MSEL) is configured to merge downstream packets (DP1) of the virtual private wire service coming from the user network interface (UNI-A) of the network element (A) and downstream packets (DP2) of the virtual private wire service carried on the mate pseudowire (M_PW).

13. The network element (A) according to claim 11 or 12, wherein its user network interface (UNI-A) comprises an OAM tool configured to detect either a failure involving the user network interface (UNI-A), or an external client device (D1) attached to the user network interface (UNI-A) or the link connecting the network element (A) to said external client device (D1).

14. The network element (A) according to claim 13, wherein, in case of a failure (F2) involving the user network interface (UNI-A), the upstream selector (SEL) is configured to send upstream packets (UP) of the virtual private wire service, carried on the transport pseudowire (T_PW), towards the user network interface (UNI-B) of the further network element (B), and the further selector is configured to send over the transport pseudowire (T PW), downstream packets (DP2) of the virtual private wire service carried on the mate pseudowire (M_PW).

15. The network element (A) according to any of claims 11 to 14, wherein, in case of a failure (F1) affecting a bidirectional link between said network element (A) and said further network element (B), the upstream selector (SEL) is configured to send upstream packets (UP) of the virtual private wire service, carried on the transport pseudowire (T_PW), towards the user network interface (UNI-A) of the network element (A), and the further selector is configured to send, over the transport pseudowire (M_PW), downstream packets (DP1) of the virtual private wire service coming from the user network interface (UNI-A) of the network element (A) and/or downstream packets (DP2) of the virtual private wire service carried on a protection path (PP) of the mate pseudowire (M_PW).

## Patentansprüche

1. Labelvermitteltes Kommunikationsnetzwerk (Communication Network, CN) mit Ringtopologie, wobei besagtes Kommunikationsnetzwerk (CN) dafür konfiguriert ist, um einen virtuellen Private-Wire-Service zur Unterstützung eines Punkt-zu-Punkt-Kundendienstes zur Verfügung zu stellen, der über das Kommunikationsnetzwerk (CN) zwischen einem ersten Rand und einem zweiten Rand besagten Kommunikationsnetzwerks transportiert wird, wobei besagtes Netzwerk (CN) umfasst:
- ein primäres Netzwerkelement (A) und ein sekundäres Netzwerkelement (B), die ein Dual-Homing-Redundanzsystem bilden, um besagten Punkt-zu-Punkt-Dienst an besagtem erstem Rand zu beenden.
- eine Transport-Pseudoverbindung (Transport Pseudowire, T_PW) zum Verbinden besagten primären Netzwerkelements (A) mit einem weiteren Netzwerkelement (E), besagten Punkt-zu-Punkt-Dienst an besagtem zweitem Rand beendend; und
- eine Kopplungs-Pseudoverbindung (Mate Pseudowire, M_PW) zum Verbinden besagten primären Netzwerkelements (A) mit besagtem sekundärem Netzwerkelement (B),
wobei besagtes primäres Netzwerkelement (A) konfiguriert ist für:
- das Senden von Upstream-Paketen (UP) des virtuellen Private-Wire-Services auf der Transport-Pseudoverbindung (T_PW) in Richtung einer Benutzer-Netzwerksschnittstelle (UNI-A, UNI-B) entweder des primären Netzwerkelements (A) oder des sekundären Netzwerkelements (B) in Abhängigkeit vom Status besagten Dual-Homing-Redundanzsystems; und
- das über die Transport-Pseudoverbindung (T_PW) erfolgende Senden von Downstream-Paketen (DP1) des virtuellen Private-Wire-Services, die von seiner Benutzer-Netzwerkschnittstelle (UNI-A) stammen, und/oder von Downstream-Paketen (DP2) des virtuellen Private-Wire-Services, die auf der Kopplungs-Pseudoverbindung (M_PW) befördert werden,
wobei besagtes, labelvermitteltes Paketkommunikationsnetzwerk (CN) dafür konfiguriert ist, um ein Ringschutz-Schaltmuster zu implementieren, um besagte Transport-Pseudoverbindung (T_PW) und besagte Kapplungs-Pseudoverbindung (M_PW) zu schützen.

2. Das labelvermittelte Paketkommunikationsnetzwerk (CN) nach Anspruch 1, wobei besagtes Netzwerk (CN) ein Transportprofil-Netzwerk des Typs Multiprotocol-Label-Switching ist.

3. Das labelvermittelte Paketkommunikationsnetzwerk (CN) nach Anspruch 2, wobei besagtes Ringschutz-Schaltmuster ein MPLS-TP-Ringschutz-Schaltmuster ist.

4. Das labelvermittelte Paketkommunikationsnetzwerk (CN) nach einem jeglichen der vorgenannten Ansprüche, wobei mit besagter Transport-Pseudoverbindung (T_PW) und besagter Kopplungs-Psudoverbindung (M_PW) ein selbes Pseudoverbindungslabel für jede Adresse in besagtem Netzwerk (CN) assoziiert ist.

5. Das labelvermittelte Paketkommunikationsnetzwerk (CN) nach einem jeglichen der vorgenannten Ansprüche, wobei mit besagter Transport-Pseudoverbindung (T_PW) auf allen Hops des Kommunikationsnetzwerks (CN) zwischen besagtem primärem Netzwerkelement (A) und besagtem weiterem Netzwerkelements (E) ein selbes Pseudoverbindungslabel assoziiert ist.

6. Das labelvermittelte Paketkommunikationsnetzwerk (CN) nach einem jeglichen der vorgenannten Ansprüche, wobei besagte Transport-Pseudoverbindung (T_PW) und besagte Kopplungs-Pseudoverbindung (M_PW) jeweils einem Transporttunnel und einem Kopplungstunnel zugewiesen sind.

7. Das labelvermittelte Paketkommunikationsnetzwerk (CN) nach Anspruch 6, wobei besagtem Transporttunnel und besagtem Kopplungstunnel ein selbes Tunnellabel für jede Adresse in besagtem Netzwerk (CN) zugewiesen ist.

8. Das labelvermittelte Paketkommunikationsnetzwerk (CN) nach einem jeglichen der vorgenannten Ansprüche, wobei im Fall eines Fehlers (F1), der einen bidirektionalen Link zwischen besagtem primärem Netzwerkelement (A) und besagtem sekundärem Netzwerkelement (B) betrifft, Folgendes gilt:
- besagtes primäres Netzwerkelement (A) ist konfiguriert für das Senden von Upstream-Paketen (UP) des virtuellen Private-Wire-Services, die über die Transport-Pseudoverbindung (T_PW) in Richtung auf ihre Benutzer-Netzwerkschnittstelle (UNI-A) befördert werden;
- besagtes sekundäres Netzwerkelement (B) ist konfiguriert für das Umschalten von Downstream-Paketen (DP2) des virtuellen Private-Wire-Services, die von seiner Benutzer-Netzwerkschnittstelle (UNI-B) kommen, auf einen Schutzpfad (Protection Path, PP) besagter Kopplungs-Pseudoverbindung (M_PW); und
- besagtes primäres Netzwerkelement (A) ist weiterhin dafür konfiguriert, um von seiner Benutzer-Netzwerkschnittstelle (UNI-A) stammende Downstream-Pakete (DP1) des virtuellen Private-Wire-Services über die Transport-Pseudoverbindung (T_PW) und/oder besagte umgeschaltete Downstreampakete (DP2) zu senden.

9. Das labelvermittelte Paketkommunikationsnetzwerk (CN) nach einem jeglichen der vorgenannten Ansprüche, wobei im Fall eines die Benutzernetzwerksschnittstelle (UNI-A) betreffenden Fehlers (F2) besagten primären Netzwerkelements (A) das primäre Netzwerkelement (A) dafür konfiguriert ist, um Upstream-Pakete (UP) des virtuellen Private-Wire-Services in Richtung der Benutzer-Netzwerkschnittstelle (UNI-B) des sekundären Netzwerkelements (B) zu senden, und um über die Transport-Pseudoverbindung (T_PW) Downstream-Pakete (DP2) des virtuellen Private-Wire-Services zu senden, die auf der Kopplungs-Pseudoverbindung (M_PW) befördert werden.

10. Das labelvermittelte Paketkommunikationsnetzwerk (CN) nach einem jeglichen der vorgenannten Ansprüche, wobei im Fall eines besagtes primäres Netzwerkelement (A) betreffenden Fehlers (F3) das sekundäre Netzwerkelement (B) dafür konfiguriert ist, um von seiner Benutzer-Netzwerkschnittstelle (UNI-B) stammende Downstream-Pakete (DP2) des virtuellen Private-Wire-Services auf einen Schutzpfad (PP) besagter Kopplungs-Pseudoverbindung (M_PW) umzuschalten, sowie dafür, um in Richtung auf seine Benutzer-Netzwerkschnittstelle (UNI-B) Upstream-Pakete (UP) des virtuellen Private-Wire-Services zu senden, die auf einem weiteren Schutzpfad (PP) besagter Transport-Pseudoverbindung (T_PW) befördert werden.

11. Netzwerkelement (A) für ein labelvermitteltes Paketkommunikationsnetzwerk (CN) mit Ringtopologie, wobei besagtes Kommunikationsnetzwerk (CN) dafür konfiguriert ist, um einen virtuellen Private-Wire-Service zur Unterstützung eines Punkt-zu-Punkt-Kundendienstes zur Verfügung zu stellen, der über das Kommunikationsnetzwerk (CN) zwischen einem ersten Rand und einem zweiten Rand besagten Kommunikationsnetzwerks transportiert wird,
wobei besagtes Netzwerkelement (A) mit einem weiteren Netzwerkelement (B) besagten Kommunikationsnetzwerks (CN) ein Dual-Homing-Redundanzsystem bildet, wobei besagtes Dual-Homing-Redundanzsystem besagten Punkt-zu-Punkt-Dienst an besagtem erstem Rand beendet,
wobei besagtes Netzwerkelement (A) über eine Transport-Pseudoverbindung (T_PW) mit noch einem weiteren Netzwerkelement (E) verbunden ist, wobei das besagte, noch weitere Netzwerkelement (E) den Punkt-zu-Punkt-Dienst an besagtem zweitem Rand beendet,
wobei besagtes Netzwerkelement (A) über eine Kopplungs-Pseudoverbindung (M_PW) mit dem weiteren Netzwerkelement (B) verbunden ist, wobei besagtes Netzwerkelement (A) umfasst:
- einen Upstream-Selektor (SEL), der konfiguriert ist für das Senden von Upstream-Paketen (UP) des virtuellen Private-Wire-Services auf der Transport-Pseudoverbindung (T_PW) in Richtung einer Benutzer-Netzwerksschnittstelle (UNI-A, UNI-B) entweder des Netzwerkelements (A) oder des weiteren Netzwerkelements (B) in Abhängigkeit vom Status besagten Dual-Homing-Redundanzsystems; und
- einen weiteren Selektor (MSEL), der konfiguriert ist für das über die Transport-Pseudoverbindung (T_PW) erfolgende Senden von Downstream-Paketen (DP1) des virtuellen Private-Wire-Services, die von der Benutzer-Netzwerkschnittstelle (UNI-A) des Netzwerkelements (A) stammen, und/oder von Downstream-Paketen (DP2) des virtuellen Private-Wire-Services, die auf der Kopplungs-Pseudoverbindung (M_PW) befördert werden,
wobei besagtes Netzwerkelement (A) weiterhin dafür konfiguriert ist, um ein Ringschutz-Schaltmuster zu implementieren, um besagte Transport-Pseudoverbindung (T_PW) und besagte Kopplungs-Pseudoverbindung (M_PW) zu schützen.

12. Das Netzwerkelement (A) nach Anspruch 11, wobei besagter weiterer Selektor (MSEL) konfiguriert ist für das Zusammenführen von Downstream-Paketen (DP1) des virtuellen Private-Wire-Services, die von der Benutzer-Netzwerkschnittstelle (UNI-A) des Netzwerkelements (A) stammen, und von Downstream-Paketen (DP2) des virtuellen Private-Wire-Services, die auf der Kopplungs-Pseudoverbindung (M_PW) befördert werden.

13. Das Netzwerkelement (A) nach Anspruch 11 oder 12, wobei seine Benutzer-Netzwerkschnittstelle (UNI-A) ein OAM-Tool umfasst, dass konfiguriert ist für das Feststellen entweder eines die Benutzer-Netzwerkschnittstelle (UNI-A) involvierenden Fehlers, für das Feststellen einer externen, an die Benutzer-Netzwerkschnittstelle (UNI-A) angebundenen Kundenvorrichtung (D1) oder der Linkverbindung des Netzwerkelements (A) mit besagter externer Kundenvorrichtung (D1).

14. Das Netzwerkelement (A) nach Anspruch 13, wobei der Upstream-Selektor (SEL) im Fall eines die Benutzer-Netzwerkschnittstelle (UNI-A) involvierenden Fehlers (F2) dafür konfiguriert ist, um auf der Transport-Pseudoverbindung (T_PW) beförderte Upstream-Pakete (UP) des virtuellen Private-Wire-Services in Richtung der Benutzer-Netzwerkschnittstelle (UNI-B) des weiteren Netzwerkelements (B) zu senden, und wobei der weitere Selektor dafür konfiguriert ist, um über die Transport-Pseudoverbindung (T_PW) Downstream-Pakete (DP2) des virtuellen Private-Wire-Services zu senden, die auf der Kopplungs-Pseudoverbindung (M_PW) befördert werden.

15. Das Netzwerkelement (A) nach einem jeglichen der Ansprüche 11 bis 14, wobei der Upstream-Selektor (SEL) im Fall eines Fehlers (F1), der einen bidirektionalen Link zwischen besagtem Netzwerkelement (A) und besagtem weiterem Netzwerkelement (B) betrifft, dafür konfiguriert ist, um auf der Transport-Pseudoverbindung (T_PW) beförderte Upstream-Pakete (UP) des virtuellen Private-Wire-Services in Richtung der Benutzer-Netzwerkschnittstelle (UNI-A) des Netzwerkelements (A) zu senden, und wobei der weitere Selektor konfiguriert für das Senden von Downstream-Paketen (DP1), die von der Benutzer-Netzwerkschnittstelle (UNI-A) des Netzwerkelements (A) stammen, über die Transport-Pseudoverbindung (T_PW) und/oder von Downstream-Paketen (DP2) des virtuellen Private-Wire-Services, die auf einem Schutzpfad (PP) der Kopplungs-Pseudoverbindung (M_PW) befördert werden.

## Revendications

1. Réseau de communication à commutation d'étiquettes (CN) ayant une topologie en anneau, ledit réseau de communication (CN) étant configuré pour fournir un service de fil privé virtuel pour supporter un service client point à point transporté sur le réseau de communication (CN) entre une première périphérie et une seconde périphérie de celui-ci, ledit réseau (CN), comprenant :
- un élément de réseau primaire (A) et un élément de réseau secondaire (B) formant un système de redondance de connexion à double anneau pour assurer la terminaison dudit service point à point au niveau de ladite première périphérie ;
- un pseudofil de transport (T_PW) pour connecter ledit élément de réseau primaire (A) à un autre élément de réseau (E) assurant la terminaison dudit service point à point au niveau de ladite seconde périphérie ; et
- un pseudofil d'appariement (M_PW) pour connecter ledit élément de réseau primaire (A) et ledit élément de réseau secondaire (B),
ledit élément de réseau primaire (A) étant configuré pour :
- envoyer des paquets amont (UP) du service de fil privé virtuel sur le pseudofil de transport (T_PW) vers une interface de réseau utilisateur (UNI-A, UNI-B) soit de l'élément de réseau primaire (A) soit de l'élément de réseau secondaire (B), en fonction d'un statut dudit système de redondance de connexion à double anneau ; et
- envoyer sur le pseudofil de transport (T_PW) des paquets aval (DP1) du service de fil privé virtuel provenant de son interface de réseau utilisateur (UNI-A) et/ou des paquets aval (DP2) du service de fil privé virtuel acheminés sur le pseudofil d'appariement (M_PW),
ledit réseau de communication de paquet à commutation d'étiquettes (CN) étant configuré pour mettre en oeuvre un schéma de commutation de protection en anneau pour fournir une protection audit pseudofil de transport (T_PW) et audit pseudofil d'appariement (M_PW).

2. Réseau de communication de paquet à commutation d'étiquettes (CN) selon la revendication 1, ledit réseau (CN) étant un réseau de commutation d'étiquettes multiprotocole - profil de transport.

3. Réseau de communication de paquet à commutation d'étiquettes (CN) selon la revendication 2, dans lequel ledit schéma de commutation de protection en anneau est un schéma de commutation de protection en anneau MPLS-TP.

4. Réseau de communication de paquet à commutation d'étiquettes (CN) selon l'une quelconque des revendications précédentes, dans lequel ledit pseudofil de transport (T_PW) et ledit pseudofil d'appariement (M_PW) ont associé une même étiquette de pseudofil pour chaque direction le long dudit réseau (CN).

5. Réseau de communication de paquet à commutation d'étiquettes (CN) selon l'une quelconque des revendications précédentes, dans lequel ledit pseudofil de transport (T_PW) a associé une même étiquette de pseudofil sur tous les bonds du réseau de communication (CN) entre ledit élément de réseau primaire (A) et ledit autre élément de réseau (E).

6. Réseau de communication de paquet à commutation d'étiquettes (CN) selon l'une quelconque des revendications précédentes, dans lequel ledit pseudofil de transport (T_PW) et ledit pseudofil d'appariement (M_PW) sont mappés dans un tunnel de transport et un tunnel d'appariement, respectivement.

7. Réseau de communication de paquet à commutation d'étiquettes (CN) selon la revendication 6, dans lequel ledit tunnel de transport et ledit tunnel d'appariement ont assigné une même étiquette de tunnel pour chaque direction le long dudit réseau (CN).

8. Réseau de communication de paquet à commutation d'étiquettes (CN) selon l'une quelconque des revendications précédentes, dans lequel, dans le cas d'une défaillance (F1) affectant une liaison bidirectionnelle entre ledit élément de réseau primaire (A) et ledit élément de réseau secondaire (B) :
- ledit élément de réseau primaire (A) est configuré pour envoyer des paquets amont (UP) du service de fil privé virtuel, acheminés sur le pseudofil de transport (T_PW), vers son interface de réseau utilisateur (UNI-A) ;
- ledit élément de réseau secondaire (B) est configuré pour commuter des paquets aval (DP2) du service de fil privé virtuel, provenant de son interface de réseau utilisateur (UNI-B), vers un chemin de protection (PP) dudit pseudofil d'appariement (M_PW) ; et
- ledit élément de réseau primaire (A) est en outre configuré pour envoyer, sur le pseudofil de transport (T_PW), des paquets aval (DP1) du service de fil privé virtuel, provenant de son interface de réseau utilisateur (UNI-A) et/ou lesdits paquets aval commutés (DP2).

9. Réseau de communication de paquet à commutation d'étiquettes (CN) selon l'une quelconque des revendications précédentes, dans lequel, dans le cas d'une défaillance (F2) affectant l'interface de réseau utilisateur (UNI-A) dudit élément de réseau primaire (A), l'élément de réseau primaire (A) est configuré pour envoyer des paquets amont (UP) du service de fil privé virtuel vers l'interface de réseau utilisateur (UNI-B) de l'élément de réseau secondaire (B), et pour envoyer sur le pseudofil de transport (T_PW) des paquets aval (DP2) du service de fil privé virtuel acheminés sur le pseudofil d'appariement (M_PW).

10. Réseau de communication de paquet à commutation d'étiquettes (CN) selon l'une quelconque des revendications précédentes, dans lequel, dans le cas d'une défaillance (F3) affectant ledit élément de réseau primaire (A), l'élément de réseau secondaire (B) est configuré pour commuter des paquets aval (DP2) du service de fil privé virtuel, provenant de son interface de réseau utilisateur (UNI-B), vers un chemin de protection (PP) dudit pseudofil d'appariement (M_PW), et pour envoyer vers son interface de réseau utilisateur (UNI-B) des paquets amont (UP) du service de fil privé virtuel acheminés sur un autre chemin de protection (PP) dudit pseudofil de transport (T_PW).

11. Élément de réseau (A) pour un réseau de communication de paquet à commutation d'étiquettes (CN) ayant une topologie en anneau, ledit réseau de communication (CN) étant configuré pour fournir un service de fil privé virtuel pour supporter un service client point à point transporté sur le réseau de communication (CN) entre une première périphérie et une seconde périphérie de celui-ci,
ledit élément de réseau (A) formant un système de redondance de connexion à double anneau avec un autre élément de réseau (B) dudit réseau de communication (CN), ledit système de redondance de connexion à double anneau assurant la terminaison dudit service point à point au niveau de ladite première périphérie,
ledit élément de réseau (A) étant connecté à encore un autre élément de réseau (E) par un pseudofil de transport (T_PW), ledit encore un autre élément de réseau (E) assurant la terminaison du service point à point au niveau de ladite seconde périphérie,
ledit élément de réseau (A) étant connecté à l'autre élément de réseau (B) par un pseudofil d'appariement (M_PW),
ledit élément de réseau (A) comprenant :
- un sélecteur amont (SEL) configuré pour envoyer des paquets amont (UP) du service de fil privé virtuel sur le pseudofil de transport (T_PW) vers une interface de réseau utilisateur (UNI-A, UNI-B) soit de l'élément de réseau (A) soit de l'autre élément de réseau (B), en fonction d'un statut dudit système de redondance de connexion à double anneau ; et
- un autre sélecteur (MSEL) configuré pour envoyer sur le pseudofil de transport (T_PW) des paquets aval (DP1) du service de fil privé virtuel provenant de l'interface de réseau utilisateur (UNI-A) de l'élément de réseau (A) et/ou des paquets aval (DP2) du service de fil privé virtuel acheminés sur le pseudofil d'appariement (M_PW),
ledit élément de réseau (A) étant en outre configuré pour mettre en oeuvre un schéma de commutation de protection en anneau pour fournir une protection audit pseudofil de transport (T_PW) et audit pseudofil d'appariement (M_PW).

12. Élément de réseau (A) selon la revendication 11, dans lequel ledit autre sélecteur (MSEL) est configuré pour fusionner des paquets aval (DP1) du service de fil privé virtuel provenant de l'interface de réseau utilisateur (UNI-A) de l'élément de réseau (A) et des paquets en aval (DP2) du service de fil privé virtuel acheminés sur le pseudofil d'appariement (M_PW).

13. Élément de réseau (A) selon la revendication 11 ou 12, dans lequel son interface de réseau utilisateur (UNI-A) comprend un outil OAM configuré pour détecter soit une défaillance impliquant l'interface de réseau utilisateur (UNI-A), soit un dispositif client externe (D1) raccordé à l'interface de réseau utilisateur (UNI-A) ou la liaison connectant l'élément de réseau (A) audit dispositif client externe (D1).

14. Élément de réseau (A) selon la revendication 13, dans lequel, dans le cas d'une défaillance (F2) comportant l'interface de réseau utilisateur (UNI-A), le sélecteur amont (SEL) est configuré pour envoyer des paquets amont (UP) du service de fil privé virtuel, acheminés sur le pseudofil de transport (T_PW), vers l'interface de réseau utilisateur (UNI-B) de l'autre élément de réseau (B), et l'autre sélecteur est configuré pour envoyer sur le pseudofil de transport (T_PW), des paquets aval (DP2) du service de fil privé virtuel acheminés sur le pseudofil d'appariement (M_PW).

15. Élément de réseau (A) selon l'une quelconque des revendications 11 à 14, dans lequel, dans le cas d'une défaillance (F1) affectant une liaison bidirectionnelle entre ledit élément de réseau (A) et ledit autre élément de réseau (B), le sélecteur amont (SEL) est configuré pour envoyer des paquets amont (UP) du service de fil privé virtuel, acheminés sur le pseudofil de transport (T_PW), vers l'interface de réseau utilisateur (UNI-A) de l'élément de réseau (A), et l'autre sélecteur est configuré pour envoyer, sur le pseudofil de transport (T_PW), des paquets aval (DP1) du service de fil privé virtuel provenant de l'interface de réseau utilisateur (UNI-A) de l'élément de réseau (A) et/ou des paquets aval (DP2) du service de fil privé virtuel acheminés sur un chemin de protection (PP) du pseudofil d'appariement (M_PW).
